# EUROPEAN PATENT SPECIFICATION

(11) **EP 3 501 913 B1**
(45) Date of publication and mention of the grant of the patent: **17.02.2021**
(21) Application number: 18212773.8
(22) Date of filing: 14.12.2018
(51) Int. Cl.: B60R 21/232, B60R 21/231, B60R 21/2338, B60R 21/233

(54) **SIDE CURTAIN AIRBAG**
SEITENVORHANGSAIRBAG
AIRBAG RIDEAU LATÉRAL

(30) Priority: 19.12.2017 GB 201721336
(43) Date of publication of application: 26.06.2019
(73) Proprietor: Ford Global Technologies, LLC, Dearborn, MI 48126 (US)
(72) Inventor: WARD, Marcus John Scott, Billericay, Essex CM12 0FD (GB); GRINDLE, Barry, Saffron Walden, Essex CB11 4AT (GB); SWINIARSKI, Michal, Brentwood, Essex CM14 4YN (GB)
(74) Representative: Stratagem IPM Limited

(56) References cited:
- JP-A- 2003 182 502
- US-A1- 2011 079 990
- US-A1- 2016 059 816
- US-B1- 8 480 125

## Description

The invention relates to a side curtain airbag for motor vehicles, in particular a side curtain bag which provides greater resistance to impact and thereby reduces the distance of travel of the head of a motor vehicle occupant beyond the side window glass during a side impact collision.

A side curtain airbag is designed to cover the side window glass of a motor vehicle in the event of a side impact collision, and operate in conjunction with other airbags such as driver airbags, passenger airbags, side (torso) airbags, and knee airbags. A side curtain airbag normally deploys from under the roof lining hanging curtain-like from the roof when inflated. Side curtain airbags aim to prevent ejection of motor vehicle occupants or their limbs from the cabin, or intrusion of debris, such as broken glass or flying metal, into the cabin, thereby to reduce injuries such as broken bones, cuts or bruises.

The airbag normally deploys for less than a second, but when the motor vehicle is rolling over, some can deploy for several seconds to compensate for the additional time the motor vehicle occupants are at risk.

A side curtain airbag has been designed for convertible motor vehicles which deploys from the parapet of the door with the bottom of the airbag remaining secured to the parapet of the door. The term "parapet" is used, in this specification, to denote the region of the door at the base of the window.

Airbags are manufactured from a flexible but airtight fabric such as nylon or polyester, and operate with a sensor which triggers a gas inflator to inflate the airbag under collision conditions. All airbags have vents which allow the gas to escape after deployment.

DE 10 2009 021 045 (Durschinger) discloses a side airbag comprising two inflatable impact protection cushions where one of the cushions is laterally fastened to a backrest below a lining and the other cushion is laterally fastened to a motor vehicle seat below another lining. Each cushion is filled with gas by a gas generator through appropriate gas filler openings. A rope is fastened to the seat and the backrest such that a banana-shaped cross section is formed toward a vehicle centre. A seat belt is attached below the rope in transition from the seat to the backrest in a resting condition.

The side airbag is suited to protect the torso from a side impact collision.

US 2011/0215557 (Ford Global Technologies LLC) discloses a side airbag for a motor vehicle including an outboard panel having a perimeter edge and a first vertical length, and an inboard panel having a perimeter edge and a second vertical length shorter than the first vertical length, the inboard and outboard panels joined to one another around their respective perimeter edges to form an enclosed volume such that when the airbag is inflated a mid-thickness line is concave toward the inboard panel. When the inflated airbag is positioned between an occupant seat and a side wall of the vehicle, the inboard-curved shape provides early engagement between an occupant of the seat and the airbag to offer improved protection for the head and neck. According to paragraph [0026] of US 2011/0215557, computer modelling and other testing has indicated that a side airbag with an inboard-curved shape may reduce levels of tension and/or shear forces experienced by the occupant's neck in a side impact collision.

KR 2013 0008338 (Autoliv development AB) discloses a side airbag module for a car seat comprising an airbag, an inflator, and a deployment shape maintaining member. The airbag is installed at one side of a back rest of a vehicle seat. The inflator deploys the airbag by supplying gas to the airbag. The deployment shape maintaining member bulbously maintains the airbag towards a passenger. US8480125 B1 discloses a side curtain airbag according to the preamble of claim 1.

### Summary of the invention

The invention provides a side curtain airbag for a motor vehicle which is deployable from a roof of the motor vehicle or a passenger door of the motor vehicle, the airbag comprising a first inflatable portion configured when inflated to cover and be in spaced alignment with side window glass of at least one passenger door.

The first inflatable portion may comprise an outboard panel having a first perimeter edge and a first vertical length and an inboard panel having a second perimeter edge and a second vertical length, the outboard and inboard panels joined together around their first and second perimeter edges thereby to form an enclosed volume, wherein when the first inflatable portion is inflated an exterior surface of the outboard panel faces towards the window glass, and wherein at least 50 % of the area of the exterior surface of the outboard panel is in spaced alignment with an opposing and inboard surface of the window glass.

The side curtain airbag may be configured such that a horizontal mid-line of the exterior surface of the outboard panel when the inflatable panel is inflated is at least 5 cm from any point on the opposing and inboard surface of the window glass.

The side curtain airbag may be configured such that when the first inflatable portion is inflated the exterior surface of the outboard panel adopts a concave profile with respect to the opposing and inboard surface of the window glass when viewed in a plane perpendicular to the opposing and inboard surface of the window glass. The first vertical length may be less than the second vertical length. The outboard panel may comprise one or more horizontal pleats.

The first inflatable portion may additionally comprises one or more additional inflatable portions in fluid communication with the first inflatable portion, the one or more additional inflatable portions configured, when inflated, to position the first inflatable portion in spaced alignment with the window glass. The one or more additional inflatable portions may be juxtaposed the exterior surface of the outboard panel, and distal from the roof when the air bag is deployed from the roof of the motor vehicle, or distal from the passenger door when the air bag is deployed from the passenger door of the motor vehicle thereby to position the first inflatable portion in spaced alignment with the window glass.

The one or more additional inflatable portions may be in the form of, when inflated:
(a) one or more horizontal bars; or
(b) a plurality of fingers arranged along a substantially horizontal line.

A side curtain airbag, deployable from a roof of the motor vehicle or a passenger door of the motor vehicle, is designed to cover the side window glass of a motor vehicle in the event of a side impact collision and prevents, on the one hand, ejection of motor vehicle occupants or their limbs from the cabin, and on the other, intrusion of broken glass or flying metal into the cabin, thereby to reduce injuries such as broken bones, cuts or bruises sustained by the motor vehicle occupants.

The side curtain airbag of the invention is designed, when inflated, to not only cover but additionally be offset away from the side window glass into the interior of the motor vehicle cabin, thereby to minimise lateral head travel on side impact collision, in particular lateral head travel beyond the plane of the side window glass. Thus the term "spaced alignment" means, in this specification, that the first inflatable portion is offset from but still covering or in front of the window glass.

### Brief Description of the figures

The invention is now described in more detail with reference to:
Figures 1a to 1c which illustrates a first embodiment of the invention;
Figures 2a and 2b which illustrates a second embodiment of the invention;
Figures 3a to 3c which illustrates a third embodiment of the invention; and
Figures 4a and 4b which illustrates a fourth embodiment of the invention.

### Detailed description of the invention

The invention provides a side curtain airbag for a motor vehicle which is deployable from a roof of the motor vehicle or a passenger door of the motor vehicle, the airbag comprising a first inflatable portion configured when inflated to cover and be in spaced alignment with side window glass of at least one passenger door.

The term "vertical length" means, in this specification, the length of the outboard panel from top to bottom as measured along its surface when the airbag is inflated.

The first inflatable portion can comprise an outboard panel having a first perimeter edge and a first vertical length and an inboard panel having a second perimeter edge and a second vertical length, the outboard and inboard panels joined together around their first and second perimeter edges thereby to form an enclosed volume, wherein when the first inflatable portion is inflated an exterior surface of the outboard panel faces towards the window glass, and wherein at least 50 %, preferably at least 60 %, most preferably at least 70 % of the area of the exterior surface of the outboard panel is in spaced alignment with an opposing surface of the window glass. 100 % of the area of the exterior surface of the outboard panel can be in spaced alignment with an opposing and inboard surface of the window glass.

This embodiment of the invention relates to an airbag wherein part of the first inflatable portion is, when inflated, still in contact with the window glass, rather than in spaced alignment.

The term "horizontal mid-line" means, in this specification and in this context, a horizontal line drawn through the midpoint on the vertical axis of the exterior surface of the outboard panel when the inflatable panel is inflated.
The horizontal mid-line of the exterior surface of the outboard panel when the inflatable panel is inflated may be at least 5 cm, preferably at least 10 cm, most preferably at least 15 cm from any point on the opposing and inboard surface of the window glass. The horizontal mid-line of the exterior surface of the outboard panel when the inflatable panel is inflated may be no more than 30 cm, preferably no more than 25 cm from any point on the opposing and inboard surface of the window glass.

The exterior surface of the outboard panel may be configured to adopt, when the first inflatable portion is inflated, a concave profile with respect to the opposing and inboard surface of the window glass when viewed in a plane perpendicular to the opposing and inboard surface of the window glass. Thus the outboard panel curves away from the opposing and inboard surface of the window glass.

In some embodiments, the concave profile of the exterior surface of the outboard panel is achieved by ensuring that the first vertical length of the outboard panel is less than the second vertical length of the inboard panel.

In some embodiments, the concave profile of the exterior surface of the outboard panel is achieved by including one or more horizontal pleats, or folds, into the outboard panel thereby to, in effect, render the first vertical length of the outboard panel less than the second vertical length of the inboard panel.

The pleats can be grouped together or can be discrete and separated. For example, an airbag can comprise one or more pleats grouped together when the airbag is inflated in front of one pane of window glass and another one or more pleats grouped together in front of a neighbouring pane of window glass.

The term "fluid communication", in this specification, means that gas may pass between, in the particular context in which the term is used, between the first inflatable portion and the one or more additional inflatable portions.

In another embodiment of the invention, the first inflatable portion additionally comprises one or more additional inflatable portions in fluid communication with the first inflatable portion, the one or more additional inflatable portions configured, when inflated, to position the first inflatable portion in spaced alignment with the window glass.

The term "juxtaposed" means, in this specification, on, around or adjacent.

The term "distal" means, in this specification, that the additional inflatable portions are positioned when the airbag is inflated away from the roof or the passenger door of the motor vehicle from which the airbag is deployed and are able to contact the parapet of the door when the airbag is deployed from the roof, or the top of the door frame when the airbag is deployed from the door, thereby to position the first inflatable portion in spaced alignment with the window glass.

The one or more additional inflatable portions may be juxtaposed to the exterior surface of the outboard panel, and distal from the roof when the airbag is deployed from a roof of the motor vehicle. Alternatively, the inflatable portions may be distal from the door when the airbag is deployed from a passenger door of the motor vehicle thereby to position the first inflatable portion in spaced alignment with the window glass.

The one or more additional inflatable portions can be in the form, when inflated:
(a) of one or more horizontal bars; or
(b) a plurality of fingers arranged along a substantially horizontal line.

The term "finger", in this specification, includes cone-shaped or bollard-shaped.

The one or more additional inflatable portions can be in the form, when inflated, of two, or three, or four, or five, or six fingers.

The manufacture of airbags is known to the skilled person. Airbags are manufactured from a flexible but airtight fabric such as nylon or polyester, and operate with a sensor which triggers a gas inflator to inflate the airbag under collision conditions. All airbags have vents which allow the gas to escape after deployment.

### Examples

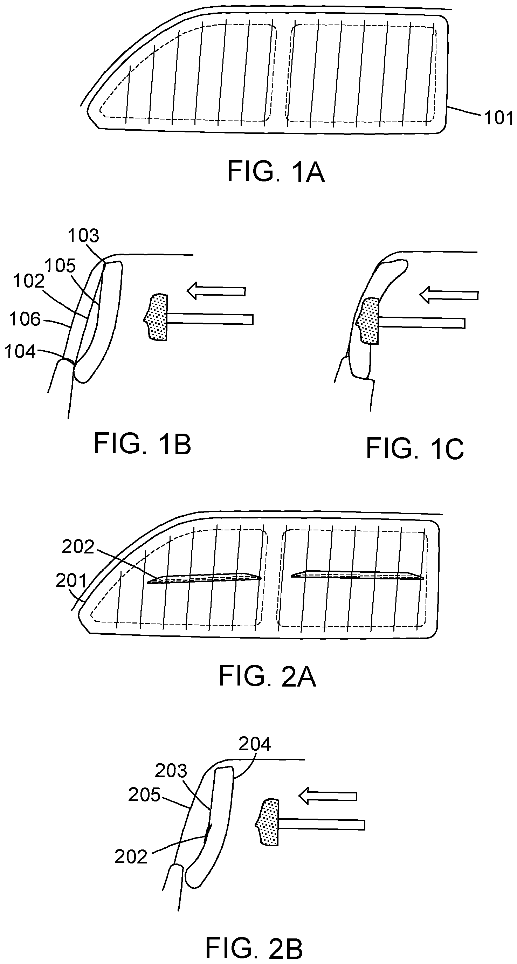

Figures 1a to 1c illustrate examples of side curtain airbags wherein the side curtain airbag comprises a first inflatable portion 101 and a tether 102 thereby the exterior surface of the outboard panel of the first inflatable portion 105 adopts a concave profile with respect to the opposing and inboard surface of the window glass 106 when viewed in a plane perpendicular to the opposing and inboard surface of the window glass.

Figure 1a illustrates a side curtain airbag when inflated. The inflated first inflatable portion in Figure 1a covers the side window glass.

Figure 1b is a side profile of the airbag in Figure 1a illustrating the airbag when inflated with a tether 102 comprising a first 103 and a second 104 end, wherein the first end is attached to a top of the airbag and the second end is attached to a bottom of the airbag, and wherein the length of the tether is less than the length from the top to the bottom of the airbag when untethered.

Figure 1c illustrates operation of the airbag in a side collision impact reducing lateral head movement towards the side window glass and ejection from the motor vehicle.

Figures 2a and 2b illustrate an example of the invention wherein the side curtain airbag comprises a first inflatable portion 201 and horizontal pleats 202 in the outboard panel 203 thereby to effectively reduce the length of the outboard panel from top to bottom measured along its surface when the airbag is inflated to less than that for the inboard panel 204 and produce a concave profile of outboard panel with respect to the opposing surface of the window glass 205 when viewed in a plane perpendicular to the opposing surface of the window glass.

Figure 2a illustrates a side curtain airbag when inflated comprising a first inflatable portion 201 and two groups of horizontal pleats 202 in the outboard panel of the airbag 203, each group comprising more than one pleat.

Figure 2b is a side profile of the airbag in Figure 2a illustrating the airbag when inflated with a horizontal pleat 202.

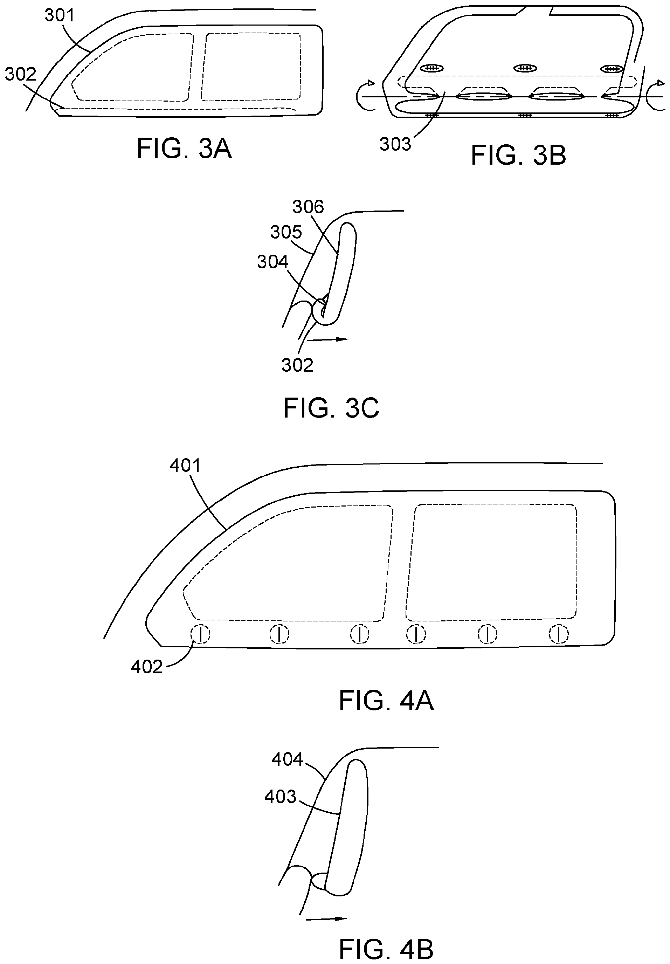

In a third example of the invention as illustrated in Figures 3a to 3c, the side curtain airbag deploys from the roof of the motor vehicle and comprises a first inflatable portion 301 and an additional inflatable portion in the form of a single horizontal bar 302 at a distal end from the roof and in fluid communication with the first inflatable portion and configured, when inflated, to position the first inflatable portion in spaced alignment with the window glass.

In particular, Figure 3a illustrates a side curtain airbag when inflated comprising a first inflatable portion 301 and an additional inflatable portion in the form of a single horizontal bar 302 in fluid communication with the first inflatable portion.

Figure 3b is another view of the side curtain airbag of Figure 3a illustrating the fluid communication between the first inflatable portion and the additional inflatable portion takes the form of several channels 303. The additional inflatable portion is rotated around a horizontal axis defined by the channels to lie against the exterior surface of the outboard panel of the first inflatable portion 304 thereby, when the airbag is inflated, to position the first inflatable portion in spaced alignment with the window glass 305.

Figure 3c is a side profile of the airbag in Figure 3a illustrating the airbag when inflated with the additional inflatable portion rotated around a horizontal axis defined by the channels 303 to lie against the exterior surface of the outboard panel of the first inflatable portion 304. The additional inflatable portion is shown secured in place by stitching to the outboard panel 306. Alternative means for securing the additional inflatable portion against the exterior surface of the outboard panel of the first inflatable portion includes adhesive. Figure 3c illustrates that the additional inflatable portion rest against the parapet of the door thereby to position the first inflatable portion in spaced alignment with the window glass 305.

Figures 4a and 4b illustrate a fourth example of the invention wherein the side curtain airbag, which is deployed from the roof of the motor vehicle, comprises a first inflatable portion 401 and one or more additional inflatable portions in the form, when inflated, of a plurality of fingers 402 in fluid communication with the first inflatable portion.

Figure 4a illustrates a side curtain airbag in the inflated state covering the side window glass, the airbag comprising a first inflatable portion 401 and one or more additional inflatable portions in the form, when inflated, of a plurality of fingers 402 arranged along a substantially horizontal line towards the bottom of the airbag. The one or more additional inflatable portions protrude from the exterior surface 403 of the outboard panel of the first inflatable portion thereby to position the first inflatable portion in spaced alignment with the window glass 404.

Figure 4b is a side profile of the airbag in Figure 4a. It can be seen that the first inflatable portion is in spaced arrangement with the window glass virtue the one or more additional inflatable portions protruding from the exterior surface of the outboard panel of the first inflatable portion and impinging on the parapet of the door pushing the first inflatable portion into the motor vehicle cabin.

It can therefore be seen that in all the aforementioned Examples, the first inflatable portion, when inflated, is in spaced alignment with the window glass.

## Claims

1. A side curtain airbag for a motor vehicle which is deployable from a motor vehicle ceiling or a motor vehicle side window sill, the airbag comprising a first inflatable portion (101, 201) configured when inflated to cover and be in spaced alignment with a side window:
**characterized in that**, when the airbag is deployed, an outboard panel of the first inflatable portion adopts a profile curving into the motor vehicle passenger compartment, wherein the outboard panel comprises one or more horizontal pleats (202).

2. A side curtain airbag according to claim 1, wherein the first inflatable portion comprises an outboard panel (105, 203) having a first perimeter edge and a first vertical length and an inboard (204) panel having a second perimeter edge and a second vertical length, the outboard and inboard panels joined together around their first and second perimeter edges thereby to form an enclosed volume, wherein when the first inflatable portion is inflated an exterior surface of the outboard panel faces towards the window, and wherein at least 50 % of the area of the exterior surface of the outboard panel is in spaced alignment with the window.

3. A side curtain airbag according to claim 1 or claim 2, wherein a horizontal mid-line of the exterior surface of the outboard panel when the inflatable panel is inflated is at least 5 cm from any point of the window.

4. A side curtain airbag according to any one of the preceding claims, wherein the first inflatable portion additionally comprises one or more additional inflatable portions in fluid communication with the first inflatable portion, the one or more additional inflatable portions configured, when inflated, to position the first inflatable portion in spaced alignment with the side window, wherein the one or more additional inflatable portions are juxtaposed the exterior surface of an outboard panel, and distal from the ceiling when the air bag is deployed from the ceiling and rests upon the window sill, or distal from the window sill when the air bag is deployed from the window sill and rests on the ceiling

5. A side curtain airbag according to claim 4, wherein the one or more additional inflatable portions are in the form, when inflated:
(i) of one or more horizontal bars (302); or
(ii) a plurality of fingers (402) arranged along a substantially horizontal line.

## Patentansprüche

1. Seitenvorhangairbag für ein Kraftfahrzeug, der von einer Kraftfahrzeugdecke oder einer Kraftfahrzeugseitenfensterbank aus eingesetzt werden kann, wobei der Airbag einen ersten aufblasbaren Abschnitt (101, 201) umfasst, der beim Aufblasen konfiguriert ist, um ein Seitenfenster abzudecken und in beabstandeter Ausrichtung mit diesem zu stehen:
**dadurch gekennzeichnet, dass** beim Einsetzen des Airbags eine Außenstoffbahn des ersten aufblasbaren Abschnitts ein Profil annimmt, das sich in den Fahrgastraum des Kraftfahrzeugs krümmt, wobei die Außenstoffbahn eine oder mehrere horizontale Falten (202) umfasst.

2. Seitenairbag nach Anspruch 1, wobei der erste aufblasbare Abschnitt eine Außenstoffbahn (105, 203) mit einer ersten Umfangskante und einer ersten vertikalen Länge und eine Innen- (204) Stoffbahn mit einer zweiten Umfangskante und einer zweiten vertikalen Länge umfasst, wobei die Außen- und Innenstoffbahnen um ihre erste und zweite Umfangskante miteinander verbunden sind, wobei dadurch ein geschlossenes Volumen ausgebildet wird, wobei beim Aufblasen des ersten aufblasbaren Abschnitts eine äußere Oberfläche der Außenstoffbahn zu dem Fenster zeigt und wobei wenigstens 50 % des Bereichs der äußeren Oberfläche der Außenstoffbahn in beabstandeter Ausrichtung zu dem Fenster stehen.

3. Seitenvorhangairbag nach Anspruch 1 oder 2, wobei eine horizontale Mittellinie der äußeren Oberfläche der Außenstoffbahn beim Aufblasen der aufblasbaren Stoffbahn wenigstens 5 cm von einem beliebigen Punkt des Fensters entfernt ist.

4. Seitenairbag nach einem der vorhergehenden Ansprüche, wobei der erste aufblasbare Abschnitt zusätzlich einen oder mehrere zusätzliche aufblasbare Abschnitte in Fluidverbindung mit dem ersten aufblasbaren Abschnitt umfasst, wobei der eine oder die mehreren zusätzlichen aufblasbaren Abschnitte konfiguriert sind, um beim Aufblasen den ersten aufblasbaren Abschnitt in beabstandeter Ausrichtung mit dem Seitenfenster zu positionieren, wobei der eine oder die mehreren zusätzlichen aufblasbaren Abschnitte neben der äußeren Oberfläche einer Außenstoffbahn und distal von der Decke angeordnet sind, wenn der Airbag von der Decke eingesetzt wird und auf der Fensterbank ruht, oder distal von dem Fensterbrett, wenn der Airbag von dem Fensterbrett eingesetzt wird und an der Decke ruht.

5. Seitenairbag nach Anspruch 4, wobei der eine oder die mehreren zusätzlichen aufblasbaren Abschnitte beim Aufblasen in der Form vorliegen von:
(i) einem oder mehreren horizontalen Stegen (302); oder
(ii) mehreren Fingern (402), die entlang einer im Wesentlichen horizontalen Linie angeordnet sind.

## Revendications

1. Airbag rideau latéral pour véhicule motorisé qui peut être déployé à partir d'un plafond de véhicule motorisé ou d'un rebord de fenêtre latérale de véhicule motorisé, l'airbag comprenant une première partie gonflable (101, 201) conçue pour lorsqu'elle est gonflée couvrir une vitre latérale et être en alignement espacé avec celle-ci :
**caractérisé en ce que**, lorsque l'airbag est déployé, un panneau extérieur de la première partie gonflable adopte un profil s'incurvant dans l'habitacle du véhicule motorisé, ledit panneau extérieur comprenant un ou plusieurs plis horizontaux (202).

2. Airbag rideau latéral selon la revendication 1, ladite première partie gonflable comprenant un panneau extérieur (105, 203) possédant un premier bord de périmètre et une première longueur verticale et un panneau intérieur (204) possédant un second bord de périmètre et une seconde longueur verticale, les panneaux extérieur et intérieur étant réunis ensemble autour de leurs premier et second bords de périmètre pour former ainsi un volume fermé, lorsque la première partie gonflable est gonflée, une surface externe du panneau extérieur étant orientée vers la fenêtre, et au moins 50 % de l'aire de la surface externe du panneau extérieur étant en alignement espacé avec la fenêtre.

3. Airbag rideau latéral selon la revendication 1 ou 2, une ligne médiane horizontale de la surface externe du panneau extérieur lorsque le panneau gonflable est gonflé étant à au moins 5 cm de tout point de la fenêtre.

4. Airbag rideau latéral selon l'une quelconque des revendications précédentes, ladite première partie gonflable comprenant en plus une ou plusieurs parties gonflables supplémentaires en communication fluidique avec la première partie gonflable, la ou les parties gonflables supplémentaires étant conçues pour, lorsqu'elles sont gonflées, positionner la première partie gonflable en alignement espacé avec la fenêtre latérale, ladite ou lesdites parties gonflables supplémentaires étant juxtaposées à la surface externe d'un panneau extérieur, et distales du plafond lorsque l'airbag gonflable est déployé à partir du plafond et repose sur le rebord de la fenêtre, ou distal du rebord de la fenêtre lorsque l'airbag gonflable est déployé à partir du rebord de la fenêtre et repose sur le plafond.

5. Airbag rideau latéral selon la revendication 4, ladite ou lesdites parties gonflables supplémentaires possédant la forme, lorsqu'elles sont gonflées :
(i) d'une ou plusieurs barres horizontales (302) ; ou
(ii) d'une pluralité de doigts (402) agencés le long d'une ligne sensiblement horizontale.
